# EUROPÄISCHE PATENTANMELDUNG

(11) **EP 4 789 965 A1**
(43) Veröffentlichungstag der Anmeldung: **12.08.2026**
(21) Anmeldenummer: 25209880.1
(22) Anmeldetag: 20.10.2025
(51) Int. Cl.: B64D 7/08, B64U 70/50, F41B 11/66

(54) **DROSSELEINRICHTUNG, STEUERVORRICHTUNG ZUR STEUERUNG EINES GASMASSENSTROMS MIT EINER SOLCHEN DROSSELEINRICHTUNG UND STARTVORRICHTUNG SOWIE VERFAHREN ZUM STARTEN EINES FLUGKÖRPERS**

(30) Priorität: 10.02.2025 DE 102025000491
(71) Anmelder: MBDA Deutschland GmbH, 86529 Schrobenhausen (DE)
(72) Erfinder: NEBEL, Florian, 85298 Scheyern (DE); KNITTL, Georg, 86551 Aichach-Obermauerbach (DE)
(74) Vertreter: Isarpatent

(57) **Zusammenfassung**

Die vorliegende Erfindung betrifft eine Drosseleinrichtung (30) für eine Gasmassenstrom, mit einem ersten Rohrabschnitt (31a) und einem konzentrisch im ersten Rohrabschnitt (31a) angeordneten zweiten Rohrabschnitt (31b) und einer Mehrzahl von in Umfangswänden (35a, b) der jeweiligen Rohrabschnitte (31a, b) eingebrachten Durchlassschlitzen (32) für einen Gasmassenstrom, wobei erster und zweiter Rohrabschnitt (31a, b) relativ zueinander bewegbar angeordnet sind und durch die Relativbewegung eine Überlappungsweite der jeweiligen Durchlassschlitze (32) einstellbar ist, und wobei ein der Drosseleinrichtung (30) zugeordneter Antrieb zur Durchführung der Relativbewegung vorgesehen ist, eine Steuervorrichtung (70) zur Steuerung eines Gasmassenstroms mit einer solchen Drosseleinrichtung (30), eine Startvorrichtung (70) zum Starten eines Flugkörpers (60), sowie ein Verfahren zum Starten eines Flugkörpers (60) in einer solchen Startvorrichtung.

## Beschreibung

### TECHNISCHES GEBIET DER ERFINDUNG

Die vorliegende Erfindung betrifft eine Drosseleinrichtung, eine Steuervorrichtung zur Steuerung eines Gasmassenstroms mit einer solchen Drosseleinrichtung, eine Startvorrichtung zum Starten eines Flugkörpers und ein Verfahren zum Starten eines Flugkörpers.

### HINTERGRUND DER ERFINDUNG

Unbemannte Flugkörper, wie beispielsweise Aufklärungsdrohnen, Raketen oder dergleichen, werden häufig aus Startrohren oder Ausstoßvorrichtungen heraus gestartet. Solche Ausstoßvorrichtungen weisen typischerweise ein Führungsrohr, in welchem der Flugkörper aufnehmbar ist, und eine Beschleunigungseinrichtung auf. Mittels der Beschleunigungseinrichtung wird der Flugkörper innerhalb des Führungsrohrs auf eine gewünschte Mindestgeschwindigkeit beschleunigt, sodass der Flugkörper nach Verlassen des Führungsrohrs zumindest für eine bestimmte Strecke, gegebenenfalls bis zur Aktivierung eines Triebwerks, flugfähig ist.

Es sind Startvorrichtungen bekannt, bei denen ein Flugkörper in einem Startrohr mittels eines durch einen Gasgenerator aufblasbaren Sackes beschleunigt werden. Dabei wird über den Gasgenerator ein Vorvolumen mit Gas gefüllt, wobei das Gas über eine Öffnung mit festem Durchmesser in den aufblasbaren Sack expandiert und dessen Volumen vergrößert. Der im Startrohr aufgenommene Flugkörper wird durch das sich vergrößernde Volumen des aufblasbaren Sackes beschleunigt und durch die Austrittsöffnung des Startrohres ausgeworfen. Der Gasdruck im Vorvolumen steigt nach der Aktivierung des Gasgenerators annährend linear an, erreicht einen Peak und fällt dann langsam ab. Durch den nachlassenden Druck im Vorvolumen sinkt der Gasmassenstrom durch die Öffnung des Vorvolumens, sodass der abnehmende Massenstrom den Druck im wachsenden Sack nicht konstant halten kann und die Beschleunigung des Flugkörpers nicht konstant bleibt.

### ZUSAMMENFASSUNG DER ERFINDUNG

Dementsprechend ist es eine Aufgabe der vorliegenden Erfindung, eine Möglichkeit zur Verfügung zu stellen eine gleichmäßige Druckverteilung in einem Gasmassenstrom zu realisieren.

Die vorliegende Aufgabe wird gelöst durch eine Drosseleinrichtung mit den Merkmalen des Anspruchs 1, eine Steuervorrichtung mit den Merkmalen des Anspruchs 6, eine Startvorrichtung mit den Merkmalen des Anspruchs 10, ein Startsystem mit den Merkmalen des Anspruchs 13 sowie ein Verfahren mit den Merkmalen des Anspruchs 14.

Nach einem ersten Aspekt der vorliegenden Erfindung ist eine Drosseleinrichtung für eine Gasmassenstrom mit einem ersten Rohrabschnitt und einem konzentrisch im ersten Rohrabschnitt angeordneten zweiten Rohrabschnitt und einer Mehrzahl von in Umfangswänden der jeweiligen Rohrabschnitte eingebrachten Durchlassschlitzen für einen Gasmassenstrom vorgesehen, wobei erster und zweiter Rohrabschnitt relativ zueinander bewegbar angeordnet sind und durch eine Relativbewegung eine Überlappungsweite der jeweiligen Durchlassschlitze einstellbar ist, und wobei ein der Drosseleinrichtung zugeordneter Antrieb zur Durchführung der Relativbewegung vorgesehen ist.

Eine der Erfindung zugrundeliegende Idee ist es, den durch Zündung eines Gasgenerators, beispielsweise in einer den Gasgenerator beinhaltenden Vorkammer, erzeugten Gasmassenstrom zu regulieren, um einen variablen oder konstanten Gasmassenstrom für nachgelagerte Vorrichtungen, beispielsweise Startvorrichtungen für Flugkörper, zur Verfügung stellen zu können. Nach der Zündung des Gasgenerators steigt der Druck im Vorvolumen annährend linear an, erreicht einen Peak und fällt dann langsam ab. Durch den nachlassenden Druck im Vorvolumen verringert sich der durch eine Auslassöffnung des Vorvolumens austretende Gasmassenstrom. Vorteilhaft kann durch die erfindungsgemäße Drosseleinrichtung der Gasmassenstrom, der durch die Auslassöffnung austritt, variabel gesteuert werden. Um im Verlauf der Expansion des Gasmassenstroms einen gleichmäßig hohen Druck aufrechtzuerhalten, muss dabei die Öffnungsweite der Durchlassschlitze sukzessive vergrößert werden. Dies kann vorteilhaft mit der erfindungsgemäßen Drosseleinrichtung erreicht werden. In einer Startvorrichtung für einen Flugkörper wird der Gasmassenstrom beispielsweise zum Aufblasen eines Sackes zur Beschleunigung und zum Austreiben des Flugkörpers aus einem Startrohr verwendet. Unmittelbar nach der Zündung des Gasgenerators wird ein Gasmassenstrom mit hohem Druck zur Verfügung gestellt, der in das Volumen des Sackes expandiert und diesen aufbläst. Im Zuge des Aufblasens und bedingt durch den hohen Druck des Gasmassenstroms wird der Flugkörper zunächst stark beschleunigt. Aufgrund des nachlassenden Gasmassenstroms kann die Anfangsbeschleunigung nicht aufrechterhalten bzw. konstant beibehalten werden. Durch die in der erfindungsgemäßen Drosseleinrichtung vorgesehene Relativbewegung der insbesondere zylindrischen Rohrabschnitte wird vorteilhaft erreicht, dass die Überlappung zwischen den Durchlassschlitzen im ersten und zweiten Rohrabschnitt variiert werden kann, um durch relativ geringe Relativbewegung große Änderungen der Drosselöffnung zu erreichen. Bei maximaler Öffnung der Drosseleinrichtung überlappen die Durchlassschlitze im ersten, beispielsweise inneren Rohrabschnitt und im zweiten, beispielsweise äußeren Rohrabschnitt. Die Durchlassschlitze sind dabei derart ausgebildet, dass im Fall der Maximalöffnung die Fläche der Drosselöffnung immer noch größer als die Summe der Flächen der Durchlassschlitze in den Rohrabschnitten ist, sodass nur die Durchlassschlitze den Gasmassenstrom limitieren. Stege zwischen den Durchlassschlitzen sind bevorzugt doppelt so breit wie die Durchlassschlitze. Zur Minimierung des Leckstroms bei geschlossener Drosseleinrichtung, kann in Ausführungsformen der Erfindung zudem einer der Rohrabschnitte aus Bronze gefertigt und mit minimaler Toleranz in den jeweils anderen Rohrabschnitt eingepasst werden, wodurch sich eine rein metallische, selbstschmierende Dichtung ergibt. Durch Größe und Anzahl der Durchlassschlitze kann eine Begrenzung bzw. Einstellung des maximal möglichen Gasmassenstroms über die Rohrabschnitte erfolgen und damit ein konstanter Gasmassenstrom über einen längeren Zeitraum aufrechterhalten werden. Dies wirkt sich insbesondere im Zusammenhang mit der Verwendung der Drosseleinrichtung in eingangs erwähnten Startvorrichtungen für Flugkörper vorteilhaft auf eine gleichmäßige Beschleunigung aus und verbessert dadurch den Startvorgang. Vorteilhaft kann über eine geringe Relativbewegung der Rohrabschnitte der Gasmassenstrom durch Schließen der Durchlassschlitze vollständig unterbunden und durch sukzessives Öffnen bis zu einem eingestellten und durch die Weite, Geometrie und Anzahl der Durchlassschlitze definierten Maximalwert variiert werden. Vorteilhaft kann durch die Einstellung der Überlappungsweite der Durchlassschlitze der Gasmassenstrom präzise reguliert werden und der Druckverlauf in einem nachgelagert vorgesehenen Hauptvolumen stabil gehalten werden. Die Relativbewegung der Rohrabschnitte ermöglicht dabei eine verbesserte Steuerung des Gasmassenstroms. Insbesondere in Anwendungen mit stark abfallendem Druck im Vorvolumen, wie z. B. in Startvorrichtungen mit aufblasbaren Säcken, wird die Beschleunigung des Flugkörpers dadurch gleichmäßiger und kontrollierter. Durch die kompakte Bauweise mit konzentrischen Rohrabschnitten wird vorteilhaft eine platzsparende Integration in bestehende Systeme ermöglicht.

Als Rohrabschnitte sind im Zusammenhang mit der vorliegenden Erfindung sowohl Rohrabschnitte mit zylindrischer Form wie auch Rohrabschnitte mit von der Zylinderform abweichender Geometrie, wie beispielsweise Vier- oder Mehrkantrohre, sowie Rohrabschnitt mit elliptischem oder hinsichtlich der Strömungsführung optimierten ggfs. variierenden Querschnitten, zu verstehen.

Unter einer Bewegung der bewegbaren Rohrabschnitte sind im Zusammenhang mit der vorliegenden Erfindungen sowohl Dreh- wie auch Linearbewegungen, beispielsweise Hubbewegungen, umfasst.

Gemäß einer Weiterbildung der Drosseleinrichtung ist einer der Rohrabschnitte feststehend und ein anderer der Rohrabschnitte durch den Antrieb bewegbar ausgebildet. Durch die Fixierung eines Rohrabschnitts wird die mechanische Komplexität reduziert. Die Bewegung des bewegbaren Rohrabschnitts kann durch den Antrieb, beispielsweise einen Schrittmotor, präzise gesteuert werden, wobei der bewegbare Rohrabschnitt im feststehenden Rohrabschnitt geführt wird. Dies ermöglicht vorteilhaft eine feine Abstimmung der Überlappungsweite der Durchlassschlitze und somit eine exakte Regulierung des Gasmassenstroms. Die Erfindung umfasst Ausführungsformen bei der der erste Rohrabschnitt als äußerer Rohrabschnitt vorgesehen und feststehend angeordnet ist und der zweite Rohrabschnitt konzentrisch mit dem ersten Rohrabschnitt als radial innenliegender, d.h. innerer Rohrabschnitt vorgesehen ist, der bewegbar im äußeren Rohrabschnitt aufgenommen und mit dem Antrieb gekoppelt ist. Die Erfindung umfasst demgegenüber auch Ausführungsformen, wobei der erste Rohrabschnitt als äußerer Rohrabschnitt bewegbar und mit dem Antrieb gekoppelt vorgesehen ist, während der zweite Rohrabschnitt konzentrisch mit dem ersten Rohrabschnitt als radial innenliegender, d.h. innerer Rohrabschnitt feststehend angeordnet ist.

Gemäß einer Weiterbildung der Drosseleinrichtung ist der Antrieb als Schrittmotor oder Linearmotor ausgebildet. Der Antrieb ist dabei bevorzugt außerhalb der Expansionskammer unterhalb, oberhalb oder seitlich an einem Vorvolumen oder einer Expansionskammer angeordnet und unmittelbar oder über geeignete Getriebeanordnungen mit dem drehbaren Rohrabschnitt verbunden. Schrittmotoren und Linearmotoren ermöglichen vorteilhaft eine exakte Steuerung der Bewegung des beweglichen Rohrabschnitts. Dadurch kann die Überlappungsweite der Durchlassschlitze in kleinen, präzisen Schritten eingestellt werden, wodurch eine feine Regulierung des Gasmassenstroms ermöglicht wird. Schrittmotoren und Linearmotoren bieten zudem vorteilhaft eine hohe Wiederholgenauigkeit, da ihre Positionierung auf vorgegebenen Schritten oder linearen Bewegungen basiert. Dies gewährleistet eine konstante und zuverlässige Steuerung der Drosseleinrichtung. Vorteilhaft lassen sich beide Motorarten in elektronische Steuerungssysteme integrieren. Es kann somit eine automatisierte Anpassung der Weite der Durchlassschlitze und damit Steuerung des Gasmassenstroms, entweder durch eine Regelungsschleife mit Sensorik oder durch das Abfahren vorprogrammierter Kennlinien erfolgen. Da Schrittmotoren und Linearmotoren sowohl langsame als auch schnelle Bewegungen präzise ausführen, werden zudem dynamische Anpassungen an veränderte Betriebsbedingungen in Echtzeit möglich.

Gemäß einer Weiterbildung der Drosseleinrichtung sind die Durchlassschlitze im Wesentlichen in axialer Richtung der Rohrabschnitte ausgerichtet, wobei in diesem Fall als Relativbewegung eine Drehbewegung vorgesehen ist. Durch die Drehbewegung können die Überlappungsweiten der axialen Durchlassschlitze kontinuierlich und präzise angepasst und damit der Gasmassenstrom gesteuert werden. Eine kleine Drehbewegung kann aufgrund der Geometrie der axialen Schlitze eine signifikante Veränderung der effektiven Drosselöffnung bewirken. Dies erhöht die Steuerungsreichweite und Flexibilität des Systems. Axial ausgerichtete Schlitze minimieren vorteilhaft Turbulenzen und Strömungsverluste im Gasmassenstrom, da die Strömung entlang der natürlichen Richtung der Schlitze geführt wird. Dies erhöht die Effizienz der Vorrichtung.

Gemäß einer alternativen Weiterbildung der Drosseleinrichtung erstrecken sich die Durchlassschlitze in einer Umfangsrichtung der Rohrabschnitte, wobei in diesem Fall als Relativbewegung eine Hubbewegung vorgesehen ist. Die Relativbewegung entlang einer Hubachse ermöglicht dabei vorteilhaft eine präzise Steuerung der Überlappungsfläche der Durchlassschlitze. Dadurch kann der Gasmassenstrom kontinuierlich und exakt reguliert werden. Eine Hubbewegung ist dabei mechanisch mit geringer Komplexität umsetzbar und gewährleistet kurze Reaktionszeiten. Durch die Orientierung der Schlitze in Umfangsrichtung kann durch eine relativ geringe Hubbewegung bereits eine signifikante Veränderung der effektiven Überlappungsweite der jeweiligen Durchlassschlitze erreicht werden.

Nach einem weiteren Aspekt der Erfindung ist eine Steuervorrichtung zur Steuerung eines Gasmassenstroms mit einer wie zuvor beschriebenen Drosseleinrichtung vorgesehen. Die Steuervorrichtung weist eine als Vorvolumen dienende Expansionskammer, wenigstens einen in der Expansionskammer angeordneten und zur Erzeugung des Gasmassenstroms aktivierbaren Gasgenerator und eine in der Expansionskammer vorgesehenen Auslassöffnung für den Gasmassenstrom auf. Die Drosseleinrichtung ist dabei mit der Auslassöffnung verbunden. Wie bereits zuvor ausgeführt, weist die Drosseleinrichtung einen ersten Rohrabschnitt und einen konzentrisch im ersten Rohrabschnitt angeordneten zweiten Rohrabschnitt mit einer Mehrzahl von in Umfangswänden der jeweiligen Rohrabschnitte eingebrachten Durchlassschlitzen für den Gasmassenstrom auf, wobei durch eine Relativbewegung von erstem und zweitem Rohrabschnitt eine Überlappungsweite der jeweiligen Durchlassschlitze einstellbar ist, indem ein der Drosseleinrichtung zugeordneter Antrieb die Relativbewegung durchführt. Nach Zündung des Gasgenerators steigt der Druck in der Expansionskammer annährend linear an, erreicht einen Peak und fällt dann langsam ab. Durch den nachlassenden Druck in der Expansionskammer verringert sich der durch die Auslassöffnung austretende Gasmassenstrom.

Eine der Erfindung zugrundeliegende Idee ist es, durch Vorsehen der Drosseleinrichtung den Gasmassenstrom, der durch die Auslassöffnung austritt, variabel zu steuern, um den Druck des austretendenden Mediums konstant zu halten. Um im Verlauf der Expansion einen gleichmäßig hohen Gasmassenstrom aufrechtzuerhalten, muss dazu die Öffnungsweite der Durchlassschlitze sukzessiv vergrößert werden. Dies kann vorteilhaft durch die in der erfindungsgemäßen Steuervorrichtung vorgesehene Drosseleinrichtung erreicht werden. In einer nachfolgend noch beschriebenen Startvorrichtung für einen Flugkörper wird der Gasmassenstrom beispielsweise zum Aufblasen eines Sackes zur Beschleunigung und zum Austreiben des Flugkörpers aus einem Startrohr verwendet. Unmittelbar nach der Zündung des Gasgenerators wird ein Gasmassenstrom mit hohem Druck zur Verfügung gestellt, der in das Volumen des Sackes expandiert und diesen aufbläst. Im Zuge des Aufblasens und bedingt durch den großen Gasmassenstrom wird der Flugkörper zunächst stark beschleunigt. Aufgrund des nachlassenden Gasmassenstroms kann die Anfangsbeschleunigung nicht aufrechterhalten bzw. konstant beibehalten werden. Durch die erfindungsgemäße Steuervorrichtung wird über die Relativbewegung der insbesondere zylindrischen Rohrabschnitte der Drosseleinrichtung vorteilhaft erreicht, die Überlappung zwischen den Durchlassschlitzen im ersten und zweiten Rohrabschnitt zu variieren, um durch geringe Relativbewegung große Änderungen der Drosselöffnung zu erreichen. Bei maximaler Öffnung der Drosseleinrichtung überlappen die Durchlassschlitze im ersten, beispielsweise inneren Rohrabschnitt und im zweiten, beispielsweise äußeren Rohrabschnitt. Die Durchlassschlitze sind derart ausgebildet, dass im Fall der Maximalöffnung die Fläche der Drosselöffnung immer noch größer als die Summe der Flächen der Durchlassschlitze in den Rohrabschnitten ist, so dass nur die Durchlassschlitze den Gasmassenstrom limitieren. Durch Größe und Anzahl der Durchlassschlitze kann somit eine Begrenzung bzw. Einstellung des maximal möglichen Gasmassenstroms über die Rohrabschnitte erfolgen und damit ein konstanter Gasmassenstrom über einen längeren Zeitraum aufrechterhalten werden. Dies wirkt sich insbesondere im Zusammenhang mit der bereits erwähnten Startvorrichtung für einen Flugkörper vorteilhaft auf eine gleichmäßige Beschleunigung aus und verbessert dadurch den Startvorgang. Vorteilhaft kann mit der Steuervorrichtung über eine geringe Relativbewegung der Rohrabschnitte der Gasmassenstrom durch Schließen der Durchlassschlitze vollständig unterbunden und durch sukzessives Öffnen bis zu einem eingestellten und durch die Weite, Geometrie und Anzahl der Durchlassschlitze definierten Maximalwert variiert werden. Vorteilhaft kann durch die Einstellung der Überlappungsweite der Durchlassschlitze der Gasmassenstrom präzise reguliert werden und der Druckverlauf in einem nachgelagert vorgesehenen Hauptvolumen dadurch stabil gehalten werden. Die Relativbewegung der Rohrabschnitte ermöglicht dabei eine verbesserte Steuerung des Gasmassenstroms. Insbesondere in Anwendungen mit stark abfallendem Druck in der Expansionskammer, wie z. B. in Startvorrichtungen mit aufblasbaren Säcken, wird die Beschleunigung des Flugkörpers dadurch gleichmäßiger und kontrollierter. Erfindungsgemäß können auch zwei und mehr Gasgeneratoren in der Expansionskammer angeordnet werden.

Der Begriff Gasgenerator umfasst im Zusammenhang mit der vorliegenden Erfindung Hybridgasgeneratoren, d.h. Gasgeneratoren, die ein Hochdruckgasreservoir, welches über eine erste Trennscheibe von der Expansionskammer getrennt ist und Treibgas, z.B. Argon oder Helium enthält, und eine abbrennbare Treibladung, welche über eine zweite Trennscheibe von dem Hochdruckgasreservoir getrennt ist, enthalten. Die Treibladung enthält dabei einen Zünder, welcher über einen elektrischen Impuls zündbar ist und dadurch einen Abbrand der Treibladung bewirken kann. Durch den Abbrand der Treibladung zerbirst die zweite Trennscheibe und induziert eine Druckwelle, welche durch das Gasreservoir propagiert. Die Druckwelle zerstört die erste Trennscheibe, wodurch das im Gasreservoir gespeicherte Gas sowie die durch den Abbrand erzeugten Gase in die Expansionskammer entweichen und der dadurch gebildete Gasmassenstrom über die Drosseleinrichtung und die Auslassöffnung aus der Expansionskammer ausströmen. Ebenfalls umfasst sind daneben Heißgasgeneratoren oder Kaltgasgeneratoren.

Gemäß einer Weiterbildung der Steuervorrichtung ist ein Steuerungsmodul vorgesehen, welches eine erste Kommunikationsschnittstelle zum Empfang von Steuersignalen und eine mit der ersten Kommunikationsschnittstelle verbundene Steuereinrichtung aufweist, welche dazu eingerichtet ist, basierend auf den Steuersignalen Aktivierungssignale zum Aktivieren des Gasgenerators und des Antriebs der Drosseleinrichtung zu erzeugen. Das Steuerungsmodul ermöglicht vorteilhaft eine koordinierte Steuerung des Gasgenerators und des Antriebs der Drosseleinrichtung. Dies gewährleistet eine präzise und synchronisierte Anpassung des Gasmassenstroms entsprechend den Anforderungen, beispielsweise in einer mit der erfindungsgemäßen Steuervorrichtung versehenen Startvorrichtung. Die erste Kommunikationsschnittstelle ermöglicht vorteilhaft den Empfang von Steuersignalen, die beispielsweise von einer externen Bedieneinheit oder einem übergeordneten Steuerungssystem gesendet werden. Durch die Verarbeitung der Steuersignale in der Steuereinrichtung können Aktivierungssignale für den Gasgenerator und den Antrieb automatisch erzeugt werden. Dies ermöglicht eine Echtzeitregelung der Drosseleinrichtung, z. B. basierend auf Sensordaten wie Druck- oder Strömungswerten. Die direkte Verbindung zwischen der Kommunikationsschnittstelle und der Steuereinrichtung ermöglicht eine schnelle Reaktion auf Änderungen im Betrieb, z. B. bei plötzlichen Druckschwankungen in der Expansionskammer. Die Kommunikationsschnittstelle ermöglicht zudem eine drahtlose oder drahtgebundene Steuerung der Vorrichtung, wodurch der Bediener die Anlage aus sicherer Entfernung kontrollieren und überwachen kann. Bevorzugt kann das Steuerungsmodul mechanisch und funktional vom Gasgenerator und der Drosseleinrichtung getrennt vorgesehen werden.

Gemäß einer Weiterbildung der Steuervorrichtung ist ein in der Expansionskammer angeordneter Druckmesssensor vorgesehen, wobei das Steuermodul eine zweite Kommunikationsschnittstelle zum Empfang von Messsignalen des Druckmesssensors aufweist und die Steuerungseinrichtung dazu eingerichtet ist, basierend auf den Messsignalen des Druckmesssensors Steuersignale zur Betätigung des Antriebs zu erzeugen. Vorteilhaft wird durch diese Ausführungsform eine kontinuierliche Überwachung des Druckes in der Expansionskammer ermöglicht. Basierend auf den Messsignalen des Druckmesssensors kann die Steuerungseinrichtung den Antrieb der Drosseleinrichtung in Echtzeit anpassen und einen konstanten Gasmassenstrom sicherzustellen. Durch die Nutzung der Druckmesssignale können Schwankungen im Druckverlauf frühzeitig erkannt und durch eine entsprechende Anpassung der Drosselöffnung ausgeglichen werden. Dies hat den Vorteil, dass der Betrieb der Vorrichtung, insbesondere unter dynamischen Bedingungen weiter stabilisiert wird. Der Druckmesssensor liefert bevorzugt kontinuierlich Informationen über den aktuellen Druckzustand, wodurch die Steuerungseinrichtung den Antrieb automatisch an veränderte Betriebsanforderungen (z. B. sinkenden Expansionskammerdruck) anpassen kann.

Gemäß einer Weiterbildung der Steuervorrichtung ist die Drosseleinrichtung innerhalb oder außerhalb der Expansionskammer angeordnet. Die Drosseleinrichtung kann somit je nach Ausführungsform vor einer Auslassöffnung der Expansionskammer oder dieser nachgelagert, außerhalb der Expansionskammer angeordnet werden. Vorteilhaft wird hierdurch eine Anpassung an unterschiedliche Bauformen und Platzverhältnisse der Steuervorrichtung und der nachgeordneten, mit der Steuervorrichtung gekoppelten Vorrichtungen ermöglicht.

Ein weiterer Aspekt der Erfindung liegt in der Bereitstellung einer Startvorrichtung zum Starten eines Flugkörpers, mit einem sich in einer Längsrichtung erstreckenden Startrohr zur Aufnahme des Flugkörpers, welches an einem ersten Ende eine Austrittsöffnung aufweist; und einer im Bereich eines zweiten Endes des Startrohrs angeordneten, eine wie zuvor beschriebene Steuervorrichtung aufweisenden Beschleunigungseinrichtung mit einem aus einem insbesondere gasdurchlässigen, bevorzugt textilen Gewebe gebildeten Sack, welcher mit einer Endöffnung mit der Auslassöffnung der Steuervorrichtung gekoppelt und durch den Gasmassenstrom zur Beschleunigung des Flugkörpers entlang der Längsrichtung aufblasbar ist. Im aufgeblasenen Zustand erstreckt sich der Sack zwischen dem ersten Ende und dem zweiten Ende des Startrohres. Vorteilhaft wird durch die erfindungsgemäße Steuervorrichtung ein geregelter Gasmassenstrom zum Befüllen des Sackes zur Verfügung gestellt, um eine gleichmäßige und kontrollierte Beschleunigung des Flugkörpers entlang der Längsrichtung des Startrohres zu gewährleisten. Dies stellt eine stabile Startbewegung sicher. Die integrierte Steuervorrichtung ermöglicht dabei vorteilhaft eine dynamische Anpassung des Gasmassenstroms an die Druckbedingungen im Sack. Dadurch wird sichergestellt, dass der Druck im Sack konstant bleibt und so eine gleichmäßige Beschleunigung des Flugkörpers unterstützen kann. Durch die Kopplung der Endöffnung des Sacks mit der Auslassöffnung der Steuervorrichtung wird der Gasmassenstrom direkt und verlustarm in den Sack geleitet und die Effizienz der Beschleunigungseinrichtung vorteilhaft gesteigert. Die erfindungsgemäße Startvorrichtung eignet sich für die Verwendung mit unterschiedlichen Flugkörpern wie Drohnen, Raketen oder andere Projektiltypen und kann durch die erfindungsgemäß erreichbare Steuerbarkeit des Gasmassenstroms in einfacher Art und Weise an verschiedene Einsatzszenarien und Flugkörperarten angepasst werden.

Gemäß einer Weiterbildung der Startvorrichtung ist das Startrohr aus einem faserverstärkten Kunststoff, insbesondere kohlefaserverstärkten Kunststoff (CFK) gebildet. Faserverstärkter Kunststoff zeichnet sich durch eine hohe Festigkeit aus. Das Startrohr kann dadurch den Kräften und Belastungen während des Starts des Flugkörpers, ohne Verformungen oder Schäden, standhalten. Faserverstärkter Kunststoff ist wesentlich leichter als herkömmliche Materialien wie Metall, wodurch vorteilhaft das Gesamtgewicht der Startvorrichtung reduziert und der Transport sowie die Handhabung, insbesondere in mobilen oder tragbaren Anwendungen, vereinfacht wird.

Gemäß einer Weiterbildung der Startvorrichtung ist die erste Kommunikationsschnittstelle durch eine in eine Außenoberfläche des Startrohrs integrierte Antenne gebildet oder mit dieser verbunden. Die Antenne kann beispielsweise durch auf eine Leiterplatte gedruckte Leiterbahnstruktur realisiert sein, wobei die Leiterplatte in eine durch die Außenoberfläche des Startrohrs definierte Vertiefung eingesetzt ist. Allgemein kann die Antenne durch ein Matrixmaterial, in welches die Verstärkungsfasern, insbesondere Kohlefasern, eingebettet sind, einlaminiert sein. Demnach ist die Antenne platzsparend in das Startrohr integriert und zuverlässig vor mechanischen Beschädigungen geschützt. Die Integration der Antenne in die Außenoberfläche erleichtert eine drahtlose Signalübertragung ins Innere des Startrohrs, insbesondere bei der Verwendung von kohlefaserverstärktem Kunststoff, welcher an sich eine für Funksignale abschirmende Wirkung hat. Die Verwendung von kohlefaserverstärktem Kunststoff für das Startrohr bietet jedoch den Vorteil, dass dieses mechanisch besonders robust und dennoch leicht ist, was den Transport und die Handhabung der Startvorrichtung erleichtert.

Ein weiterer Aspekt der Erfindung liegt in der Bereitstellung eines Startsystems zum Starten eines Flugkörpers, mit einer wie zuvor beschriebenen Startvorrichtung und einer Bedienvorrichtung mit einer Bedienschnittstelle, einer mit der Bedienschnittstelle verbundenen Signalerzeugungseinrichtung zum Erzeugen von Steuersignalen und einer dritten Kommunikationsschnittstelle, welche zur Signalübertragung an die erste Kommunikationsschnittstelle eingerichtet ist. Die Signalerzeugungseinrichtung kann insbesondere als Mikrocontroller oder allgemein mit einem Prozessor und einem nicht-flüchtigen Datenspeicher realisiert sein. Die Bedienschnittstelle kann beispielsweise ein einfacher Druckknopf oder eine graphische Schnittstelle, z.B. in Form eines Touch-Displays, sein. Die dritte Kommunikationsschnittstelle kann, ähnlich der ersten und zweiten Kommunikationsschnittstelle, zur drahtgebundenen oder drahtlosen Signalübertragung eingerichtet sein, z.B. in Form einer Funkschnittstelle. Die Bedieneinrichtung dient dazu, den Gasgenerator und den Antrieb der Steuervorrichtung aus der Ferne zu aktiveren, indem über die Benutzerschnittstelle ein entsprechender Befehl durch einen Benutzer gegeben wird. Die Signalerzeugungseinrichtung erzeugt basierend auf diesem Befehl ein Steuersignal, welches über die dritte Kommunikationsschnittstelle an die erste Kommunikationsschnittstelle des Steuerungsmoduls übertragen wird. Basierend auf diesem Steuersignal erzeugt die Steuerungseinrichtung ein Aktivierungssignal, z.B. in Form eines elektrischen Impulses, durch welches der Gasgenerator und der Antrieb der Steuervorrichtung aktiviert werden. Der Gasgenerator setzt in der Folge einen Gasmassenstrom frei, welcher, gesteuert durch die Steuervorrichtung den Sack aufbläst und dadurch den Flugkörper beschleunigt. Die Bedienvorrichtung mit einer insbesondere klar strukturierten Bedienschnittstelle ermöglicht dem Benutzer eine einfache und intuitive Steuerung des Startsystems.

Dies reduziert vorteilhaft die Komplexität der Bedienung und minimiert das Risiko von Fehlbedienungen. Die jeweiligen Kommunikationsschnittstellen können so gestaltet werden, dass sie verschiedene Arten von Kommunikation unterstützen, z. B. Funk, Bluetooth oder drahtgebundene Verbindungen, wodurch vorteilhaft die Anpassung des Systems an spezifische Betriebsumgebungen ermöglicht wird.

Ein weiterer Aspekt der Erfindung liegt in der Bereitstellung eines Verfahren zum Starten eines Flugkörpers in einer wie zuvor beschriebenen Startvorrichtung, umfassend: Empfangen eines Startsignals in einem Steuerungsmodul über eine erste Kommunikationsschnittstelle der Steuervorrichtung; Aktivieren des wenigstens einen Gasgenerators zur Erzeugung des Gasmassenstroms; Einleiten des Gasmassenstroms in einen mit der Steuervorrichtung verbundenen Sack über die Drosseleinrichtung; Aktivieren des Antriebes der Drosseleinrichtung; Variieren der Überlappungsweite der Durchlassschlitze der Drosseleinrichtung zur Aufrechterhaltung eines konstanten Gasdruckes im Gasmassenstrom durch eine mittels des Antriebes durchgeführte Relativbewegung der Rohrabschnitte; Aufblasen des Sackes; und Beschleunigen des Flugkörpers entlang der Längsrichtung des Startrohres. Die dynamische Anpassung der Überlappungsweite der Durchlassschlitze in der Drosseleinrichtung durch den Antrieb ermöglicht dabei vorteilhaft eine kontinuierliche Aufrechterhaltung eines konstanten Gasdrucks im Sack. Dadurch wird eine gleichmäßige und kontrollierte Beschleunigung des Flugkörpers entlang der Längsrichtung des Startrohrs erreicht. Die Steuerung der Relativbewegung der Rohrabschnitte gewährleistet dabei vorteilhaft eine exakte Regulierung des Gasmassenstroms und verbessert die Leistungsfähigkeit des Systems, insbesondere bei wechselnden Druckbedingungen. Das Verfahren kann durch die vorprogrammierte oder sensorbasierte Steuerung des Antriebs an unterschiedliche Betriebsbedingungen angepasst werden. Dies ermöglicht den Einsatz in einer Vielzahl von Anwendungen und mit verschiedenen Flugkörpertypen und -arten. Das kontinuierliche Aufblasen des Sacks und die konstante Druckregulierung stellen eine konstante Beschleunigung des Flugkörpers sicher und stabilisieren den Flugkörper während des Starts und in der Beschleunigungsphase. Das Verfahren kann insbesondere im Zusammenhang mit der zuvor beschriebenen Startvorrichtung verwendet werden.

Gemäß einer Weiterbildung des Verfahrens ist eine Messung des Gasdruckes in der Steuervorrichtung vorgesehen, wobei eine Steuerung des Antriebes anhand von aus Messsignalen des Druckmesssensors abgeleiteten Steuersignale erfolgt. Die kontinuierliche Überwachung des Gasdrucks in der Steuervorrichtung ermöglicht vorteilhaft eine exakte Steuerung des Antriebs der Drosseleinrichtung und gewährleistet dadurch eine konstante Druckregulierung und damit gleichmäßige Beschleunigung des Flugkörpers. Durch die direkte Verarbeitung der Messsignale kann das System sofort auf Druckänderungen reagieren und die Überlappungsweite der Durchlassschlitze entsprechend anpassen. Bei Verwendung eines reaktionsschnellen Drucksensors, kann über eine Regelschleife die Durchlassschlitzweite in der Drosseleinrichtung derart gesteuert variiert werden, dass der Druck im Hauptvolumen, d.h. im aufblasbaren Sack die gewünschten Charakteristika behält. Bei guter Kenntnis der involvierten Prozesse kann auf eine Regelschleife allerdings auch verzichtet werden und der Schrittmotor auf das Abfahren einer Kennlinie programmiert werden.

### KURZBESCHREIBUNG DER ZEICHNUNGEN

Im Folgenden wird die Erfindung unter Bezugnahme auf die Figur der Zeichnung erläutert. Es zeigt:
- Fig. 1: eine schematische Darstellung einer Startvorrichtung gemäß einer Ausführungsform der vorliegenden Erfindung in Schnittdarstellung;
- Fig. 2: eine schematische Darstellung einer Drosseleinrichtung gemäß einer Ausführungsform der vorliegenden Erfindung in Seitensicht;
- Fig. 3: eine schematische Darstellung einer Drosseleinrichtung gemäß einer Ausführungsform der vorliegenden Erfindung in Draufsicht; und
- Fig. 4: eine Blockdarstellung von Verfahrensschritten des Verfahren zum Starten eines Flugkörpers gemäß einer Ausführungsform der Erfindung.

### AUSFÜHRLICHE BESCHREIBUNG EINES AUSFÜHRUNGSBEISPIELS DER ERFINDUNG

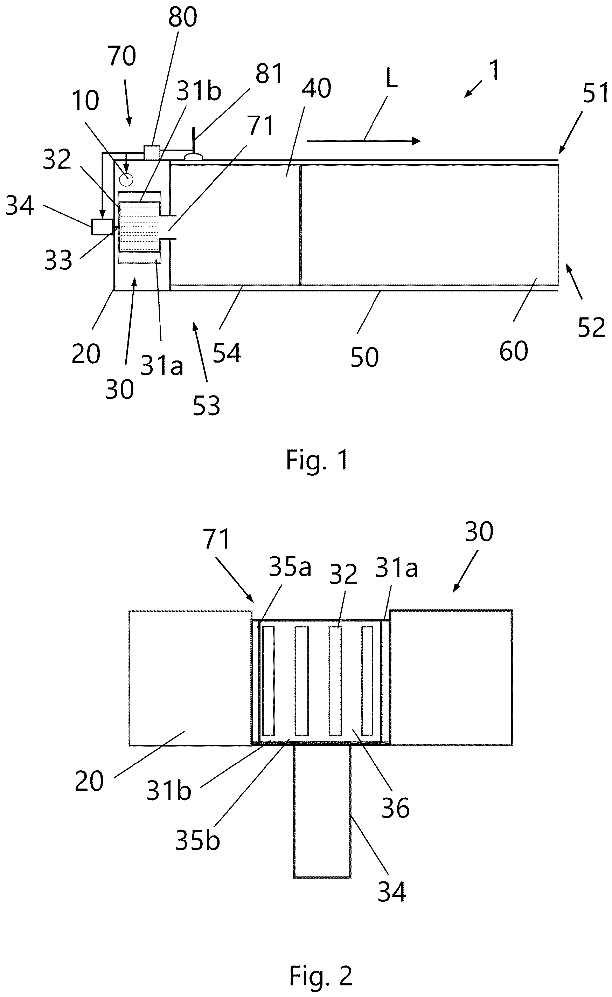

Fig. 1 zeigt eine schematische Darstellung einer Ausführungsform der erfindungsgemäßen Startvorrichtung 1 in Schnittdarstellung. Die Startvorrichtung 1 weist ein Startrohr 50 auf, das sich entlang einer Längsrichtung L erstreckt und zur Führung eines Flugkörpers 60 während des Beschleunigungsvorgangs dient. Es ist an einem ersten Ende 51 mit einer Austrittsöffnung 52 versehen, aus der Flugkörper 60 das Startrohr 50 beim Startvorgang verlässt. Am gegenüberliegenden, zweiten Ende 53 des Startrohres 50 ist die Expansionskammer 20 der Steuervorrichtung 70 angeordnet und mit dem Innenvolumen 54 des Startrohres 50 über die Auslassöffnung 71 verbunden.

Die Steuervorrichtung 70 umfasst eine Expansionskammer 20, in der der Gasgenerator 10 aufgenommen ist. Im Betrieb der Startvorrichtung 1 erzeugt der Gasgenerator 10 nach Zündung einen Gasmassenstrom, der in den im Startrohr 50 zwischen dem Flugkörper 60 und der Steuervorrichtung 70 vorgesehenen Sack 40 expandiert und diesen aufbläst. Ebenfalls innerhalb der Expansionskammer 20 angeordnet ist die Drosseleinrichtung 30, durch die der Gasmassenstrom aus der Expansionskammer 20 in den aufblasbaren Sack 40 geleitet wird. Die Drosseleinrichtung 30 weist zwei konzentrische Rohrabschnitte 31a, 31b mit axial ausgerichteten Durchlassschlitzen 32 auf. Der im Ausführungsbeispiel äußere Rohrabschnitt 31a ist in der Expansionskammer 20 festgelegt und umschließt den zweiten, inneren Rohrabschnitt 31b, der über eine Welle 33 mit einem Schrittmotor 34 als Antrieb gekoppelt und drehbar im ersten, äußeren Rohrabschnitt 31a gelagert ist. Durch eine von dem Schrittmotor 34 durchgeführte Drehbewegung des zweiten, inneren Rohrabschnittes 31b relativ zum ersten, äußeren Rohrabschnitt 31a wird die Überlappungsweite der Durchlassschlitze 32 im ersten und zweiten Rohrabschnitt 31a, 31b variiert und der Gasmassenstrom gedrosselt. Durch die Drosselung wird der Druck im Gasmassenstrom gesteuert und es kann so ein konstanter Druck während des Aufblasens des Sackes 40 hergestellt werden, aus der eine gleichmäßige Beschleunigung des Flugkörpers 60 resultiert.

Der aufblasbare Sack 40 besteht aus einem textilen Gewebe und ist über die Auslassöffnung 71 ist mit der Drosseleinrichtung 30 gekoppelt. Er wird durch den Gasmassenstrom aufgeblasen und expandiert in Längsrichtung L des Startrohrs 50. Durch die Expansion übt der Sack 40 während des Startvorganges eine Beschleunigungskraft auf den Flugkörper 60 bis zu dessen vollständigem Austritt aus dem Startrohr 50 aus. Das Steuerungsmodul 80 ist mit dem Gasgenerator 10 und dem als Antrieb vorgesehene Schrittmotor 34 verbunden und steuert die Initialisierung des Startvorganges durch Ausgabe eines Zündimpulses an den Gasgenerator 10 und zur Steuerung des Gasmassenstroms durch entsprechende Ansteuerung des Schrittmotors 34 zur Variation der Öffnungsweite bzw.

Überlappung der Durchlassschlitze 32 im erstem und zweiten Rohrabschnitt 31a, 31b. Das Steuerungsmodul 80 empfängt Steuersignale über eine mit einer beispielsweise am Startrohr 50 angeordneten oder in dieses eingesetzten Antenne 81 gekoppelten Kommunikationsschnittstelle. Die Kommunikationsschnittstelle ermöglicht den Empfang und die Übertragung von Steuersignalen zwischen der Startvorrichtung 1 und einer externen Bedienvorrichtung (nicht dargestellt).

Fig. 2 zeigt eine schematische Darstellung der Drosseleinrichtung 30 gemäß einer Ausführungsform der vorliegenden Erfindung in Seitensicht. Der erste Rohrabschnitt 31a, welcher als äußerer Rohrabschnitt 31a vorgesehen ist, kann feststehend in einem Vorvolumen, beispielsweise einer im Zusammenhang mit Fig. 1 beschriebenen Expansionskammer 20 angeordnet werden. Er weist in seiner Umfangswand 35a mehrere in axialer Richtung des Rohrabschnittes 31a verlaufende und die Umfangswand 35a durchbrechende Durchlassschlitze 32 auf. Der zweite Rohrabschnitt 31b ist konzentrisch innerhalb des ersten Rohrabschnitts 31a bewegbar angeordnet. Auch der zweite Rohrabschnitt 31b verfügt über seine Umfangswand 35b durchbrechende Durchlassschlitze 32, die mit den Durchlassschlitze 32 des ersten Rohrabschnitts 31a überlappen. Die Stege 36 zwischen den Durchlassschlitzen 32 sind bevorzugt doppelt so breit wie die Durchlassschlitze 32. Durch Rotation des zweiten Rohrabschnittes 31b relativ zum ersten Rohrabschnitt 31a kann die Überlappungsweite und damit die Schlitzgröße variiert werden, um darüber den die Drosseleinrichtung 30 durchströmenden Gasmassenstrom zu steuern. Durch Größe und Anzahl der Durchlassschlitze 32 kann eine Begrenzung bzw. Einstellung des maximal möglichen Gasmassenstroms über die Rohrabschnitte 31a, 31b erfolgen und damit ein konstanter Gasmassenstrom über einen längeren Zeitraum aufrechterhalten werden. Dies wirkt sich insbesondere bei Verwendung der Drosseleinrichtung 30 in der im Zusammenhang mit Fig. 1 beschriebenen Startvorrichtung 1 für einen Flugkörper 60 vorteilhaft auf eine gleichmäßige Beschleunigung aus und verbessert dadurch den Startvorgang. Der Antrieb, im Ausführungsbeispiel ein Schrittmotor 34, ist im Ausführungsbeispiel unterhalb der Drosseleinrichtung 30 angeordnet und bewirkt im Betrieb die Rotation des zweiten Rohrabschnittes 31b im ersten Rohrabschnitt 31a, um die Drosselöffnung entsprechend der Anforderungen anzupassen. Die variable Überlappung der Durchlassschlitze 32 reguliert somit die Drosselfunktion und damit den durch die Steuervorrichtung 70 strömenden Gasmassenstrom. Die Drosseleinrichtung 30 kann durch entsprechende Drehung des inneren zweiten Rohrabschnittes 31b zwischen einem vollständig geschlossenen Zustand, wobei die Durchlassschlitze 32 in den Rohrabschnitten 31a, 31b nicht überlappen und einem vollständig geöffneten Zustand, d.h. bei vollständiger Überlappung der Durchlassschlitze 32 variiert werden. Im vollständig geöffneten Zustand kann der maximal mögliche Gasmassenstrom durch die Drosseleinrichtung 30 über die Auslassöffnung 71 beispielsweise in einen aufblasbaren Sack 40 (vgl. Fig. 1) einströmen. Durch kontinuierliches bzw. gesteuertes Öffnen der Durchlassschlitze 32 wird so ein konstantes Druckniveau im Gasmassenstrom und ein gleichmäßiges Aufblasen des Sackes 40 und eine gleichmäßige Beschleunigung eines Flugkörpers 60 erreicht.

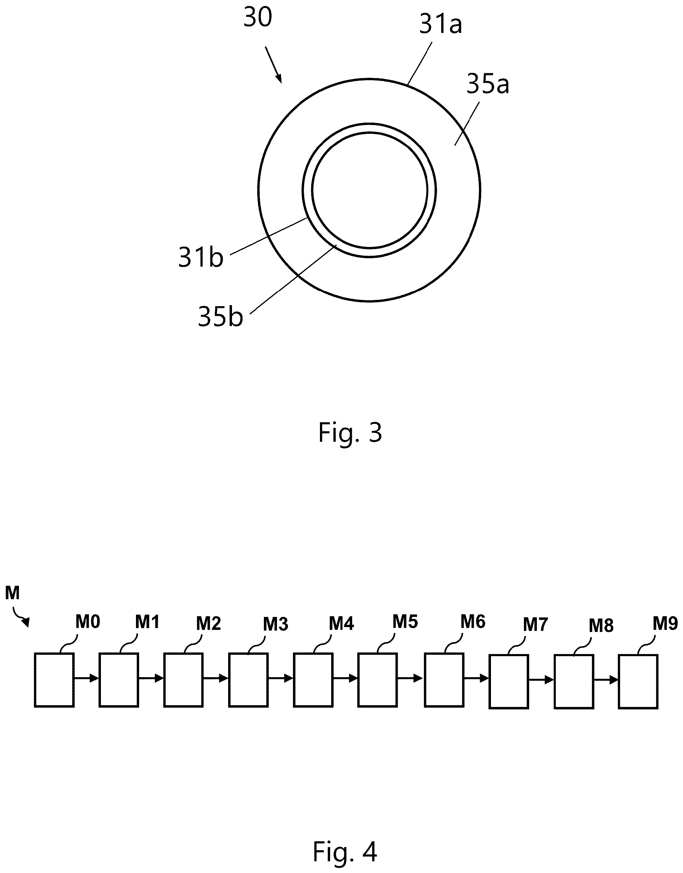

Fig. 3 zeigt eine schematische Darstellung der Drosseleinrichtung 30 gemäß einer Ausführungsform der vorliegenden Erfindung in seitlicher Schnittansicht. Äußerer und innerer Rohrabschnitt 31a, 31b sind zylindrisch ausgebildet und konzentrisch angeordnet wobei die in den jeweiligen Umfangswänden 35a, b der Rohrabschnitt 31a, 31b eingebrachten Durchlassschlitze 32 (vgl. Fig. 2) überlappen. Die Durchlassschlitze 32 sind gleichmäßig entlang der Umfangswände 35a, 35b der Rohrabschnitte 31a, 31b verteilt. Der zweite Rohrabschnitt 31b ist beweglich im ersten Rohrabschnitt 31a angeordnet und ermöglicht durch eine Drehbewegung relativ zum ersten Rohrabschnitt 31a die Variation der Überlappungsweite der Durchlassschlitze 32, wobei durch die Überlappung der Durchlassschlitze 32 die Durchgangsweite variiert und damit der durch die Drosseleinrichtung 30 geführte Gasmassenstrom gedrosselt bzw. gesteuert wird. Je nach Position des zweiten Rohrabschnitts 31b kann die Drosselöffnung vollständig geschlossen oder maximal geöffnet sein. Zur Minimierung des Leckstroms bei geschlossener Drosseleinrichtung 30, kann einer der Rohrabschnitte 31a, 31b aus Bronze gefertigt werden und mit minimaler Toleranz in den jeweils anderen Rohrabschnitt 31a, 31b eingepasst werden, wodurch sich eine rein metallische, selbstschmierende Dichtung ergibt.

Fig. 4 zeigt eine Blockdarstellung von Verfahrensschritten des Verfahren M zum Starten eines Flugkörpers 60 in einer Startvorrichtung 1 gemäß einer Ausführungsform der Erfindung. Nachdem in einem ersten den Start vorbereitenden Schritt M0 der Flugkörper 60 im Startrohr 50 der Startvorrichtung 1 eingesetzt wurde, erfolgt im Schritt M1 das Empfangen eines Startsignals in einem Steuerungsmodul 80 über eine erste Kommunikationsschnittstelle 82 der Steuervorrichtung 70. Im darauffolgenden Schritt M2 wird der wenigstens eine Gasgenerator 10 zur Erzeugung des Gasmassenstroms aktiviert. Der Gasmassenstrom wird in Schritt M3 über die Drosseleinrichtung 30 in einen mit der Steuervorrichtung 70 verbundenen Sack 40 geleitet. Gleichzeitig mit oder mit geringem Zeitversatz zur Aktivierung des Gasgenerators 10 in Schritt M2 erfolgt in Schritt M4 ein Aktivieren des Antriebes der Drosseleinrichtung 30 und im unmittelbar nachfolgenden Schritt M5 ein über die Bewegung des Antriebes vermitteltes Variieren der Überlappungsweite der Durchlassschlitze 32 der Drosseleinrichtung 30 zur Aufrechterhaltung eines konstanten Gasdruckes im Gasmassenstrom durch die mittels des Antriebes durchgeführte Relativbewegung der Rohrabschnitte 31a, 31b. In Schritt M6 wird der Sack 40 aufgeblasen, und gleichzeitig mit dem Aufblasen in Schritt M6 der Flugkörpers 60 entlang der Längsrichtung L des Startrohres 50 in Schritt M7 beschleunigt, und in Schritt M8 mit konstanter Geschwindigkeit aus dem Startrohr 50 ausgetrieben. In einem optionalen Schritt M9 kann während des gesamten Startvorganges eine Messung des Gasdruckes in der Steuervorrichtung 70, d.h. in der Expansionskammer 20 mittels eines dort angeordneten Druckmesssensors durchgeführt werden, wodurch eine Steuerung des Antriebes der Drosseleinrichtung 30 über eine Regelschleife anhand von aus Messsignalen des Druckmesssensors abgeleiteten Steuersignale erfolgen kann, um die Durchlassschlitzweite in der Drosseleinrichtung 30 gesteuert zu variieren, sodass der Druck im Hauptvolumen, d.h. im aufblasbaren Sack 40 die gewünschten Charakteristika behält. Bei guter Kenntnis der involvierten Prozesse kann auf eine Regelschleife allerdings auch verzichtet werden und der als Antrieb beispielsweise vorgesehene Schrittmotor 34 auf das Abfahren einer Kennlinie programmiert werden.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

Ergänzend sei darauf hingewiesen, dass "aufweisend" oder "umfassend" keine anderen Elemente oder Schritte ausschließt und dass "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHENLISTE

- 1: Startvorrichtung
- 10: Gasgenerator
- 20: Expansionskammer
- 30: Drosseleinrichtung
- 31a, b: Rohrabschnitt
- 32: Durchlassschlitz
- 33: Welle
- 34: Schrittmotor
- 35a, b: Umfangswand
- 36: Steg
- 40: Sack
- 50: Startrohr
- 51: erstes Ende
- 52: Austrittsöffnung
- 53: zweites Ende
- 54: Innenvolumen
- 60: Flugkörper
- 70: Steuervorrichtung
- 71: Auslassöffnung
- 80: Steuerungsmodul
- 81: Antenne
- 82: Kommunikationsschnittstelle
- L: Längsrichtung
- M: Verfahren
- M0-M9: Verfahrensschritte

## Patentansprüche

1. Drosseleinrichtung (30) für eine Gasmassenstrom, mit einem ersten Rohrabschnitt (31a) und einem konzentrisch im ersten Rohrabschnitt (31a) angeordneten zweiten Rohrabschnitt (31b) und einer Mehrzahl von in Umfangswänden (35a, b) der jeweiligen Rohrabschnitte (31a, b) eingebrachten Durchlassschlitzen (32) für einen Gasmassenstrom, wobei erster und zweiter Rohrabschnitt (31a, b) relativ zueinander bewegbar angeordnet sind und durch die Relativbewegung eine Überlappungsweite der jeweiligen Durchlassschlitze (32) einstellbar ist, und wobei ein der Drosseleinrichtung (30) zugeordneter Antrieb zur Durchführung der Relativbewegung vorgesehen ist.

2. Drosseleinrichtung (30) nach Anspruch 1, wobei einer der Rohrabschnitte (31a, b) feststehend und ein anderer der Rohrabschnitte (31a, b) durch den Antrieb bewegbar ausgebildet ist.

3. Drosseleinrichtung (30) nach Anspruch 1 oder 2, wobei der Antrieb als Schrittmotor (34) oder Linearmotor ausgebildet ist.

4. Drosseleinrichtung (30) nach einem der voranstehenden Ansprüche, wobei die Durchlassschlitze (32) in im Wesentlichen axialer Richtung der Rohrabschnitte (31a, b) ausgerichtet sind und als Relativbewegung eine Drehbewegung vorgesehen ist.

5. Drosseleinrichtung (30) nach einem der Ansprüche 1 bis 3, wobei sich die Durchlassschlitze (32) in einer Umfangsrichtung der Rohrabschnitte (31a, b) erstrecken und als Relativbewegung eine Hubbewegung vorgesehen ist.

6. Steuervorrichtung (70) zur Steuerung eines Gasmassenstroms mit einer Drosseleinrichtung (30) nach einem der Ansprüche 1 bis 5, mit:
- einer Expansionskammer (20);
- wenigstens einem in der Expansionskammer (20) angeordneten und zur Erzeugung des Gasmassenstroms aktivierbaren Gasgenerator (10); und
- einer in der Expansionskammer (20) vorgesehenen Auslassöffnung (71) für den Gasmassenstrom;
wobei die Drosseleinrichtung (30) mit der Auslassöffnung (71) verbunden ist.

7. Steuervorrichtung (70) nach Anspruch 6, wobei ein Steuerungsmodul (80) vorgesehen ist, welches eine erste Kommunikationsschnittstelle (82) zum Empfang von Steuersignalen und eine mit der ersten Kommunikationsschnittstelle (82) verbundene Steuereinrichtung aufweist, welche dazu eingerichtet ist, basierend auf den Steuersignalen Aktivierungssignale zum Aktivieren des Gasgenerators (10) und des Antriebs der Drosseleinrichtung (30) zu erzeugen.

8. Steuervorrichtung (70) nach Anspruch 7, wobei ein in der Expansionskammer (20) angeordneter Druckmesssensor vorgesehen ist und das Steuermodul (80) eine zweite Kommunikationsschnittstelle zum Empfang von Messsignalen des Druckmesssensors aufweist und die Steuerungseinrichtung dazu eingerichtet ist, basierend auf den Messsignalen des Druckmesssensors Steuersignale zur Betätigung des Antriebs zu erzeugen.

9. Steuervorrichtung (70) nach einem der Ansprüche 6 bis 8, wobei die Drosseleinrichtung (30) innerhalb oder außerhalb der Expansionskammer (20) angeordnet ist.

10. Startvorrichtung (70) zum Starten eines Flugkörpers (60), mit: einem sich in einer Längsrichtung (L) erstreckenden Startrohr (50) zur Aufnahme des Flugkörpers (60), welches an einem ersten Ende (51) eine Austrittsöffnung (52) aufweist; und einer im Bereich eines zweiten Endes (53) des Startrohrs (50) angeordneten, mit einer Steuervorrichtung (70) nach einem der Ansprüche 6 bis 9 verbundenen Beschleunigungseinrichtung mit einem aus einem insbesondere gasdurchlässigen, bevorzugt textilen Gewebe gebildeten Sack (40), welcher mit einer Endöffnung mit der Auslassöffnung (71) der Steuervorrichtung (70) gekoppelt und durch den Gasmassenstrom zur Beschleunigung des Flugkörpers (60) entlang der Längsrichtung (L) aufblasbar ist und sich im aufgeblasenen Zustand zwischen dem ersten Ende (51) und dem zweiten Ende (53) des Startrohres (50) erstreckt.

11. Startvorrichtung (1) nach Anspruch 10, wobei das Startrohr (50) aus einem faserverstärkten Kunststoff, insbesondere kohlefaserverstärkten Kunststoff (CFK), gebildet ist.

12. Startvorrichtung (1) nach Anspruch 10 oder 11, wobei die erste Kommunikationsschnittstelle (82) durch eine in eine Außenoberfläche des Startrohrs (50) integrierte Antenne (81) gebildet oder mit dieser verbunden ist.

13. Startsystem zum Starten eines Flugkörpers (60), mit: einer Startvorrichtung (1) nach einem der Ansprüche 10 bis 12 und einer Bedienvorrichtung mit einer Bedienschnittstelle, einer mit der Bedienschnittstelle verbundenen Signalerzeugungseinrichtung zum Erzeugen von Steuersignalen und einer dritten Kommunikationsschnittstelle, welche zur Signalübertragung an die erste Kommunikationsschnittstelle (82) eingerichtet ist.

14. Verfahren zum Starten eines Flugkörpers (60) in einer Startvorrichtung (1) nach einem der Ansprüche 10 bis 12, umfassend:
- Empfangen eines Startsignals in einem Steuerungsmodul (80) über eine erste Kommunikationsschnittstelle (82) der Steuervorrichtung (1);
- Aktivieren des wenigstens einen Gasgenerators (10) zur Erzeugung eines Gasmassenstroms;
- Einleiten des Gasmassenstroms in einen mit der Steuervorrichtung (1) verbundenen Sack (4) über die Drosseleinrichtung (30);
- Aktivieren des Antriebes der Drosseleinrichtung (30);
- Variieren der Überlappungsweite der Durchlassschlitze (32) der Drosseleinrichtung (30) zur Aufrechterhaltung eines konstanten Gasdruckes im Gasmassenstrom durch eine mittels des Antriebes durchgeführte Relativbewegung der Rohrabschnitte (31a, b);
- Aufblasen des Sackes (40), und
- Beschleunigen des Flugkörpers (60) entlang der Längsrichtung (L) des Startrohres (50).

15. Verfahren nach Anspruch 14, wobei eine Messung des Gasdruckes in der Steuervorrichtung vorgesehen ist und eine Steuerung des Antriebes anhand von aus Messsignalen des Druckmesssensors abgeleiteten Steuersignale erfolgt.
